# EUROPEAN PATENT APPLICATION

(11) **EP 1 318 347 A2**
(43) Date of publication of application: **11.06.2003**
(21) Application number: 02025317.5
(22) Date of filing: 13.11.2002
(51) Int. Cl.: F17C 6/00, F17C 5/02

(54) **Portable cylinder for liquid gas, fitted with means which allow it to be filled in safe conditions**

(30) Priority: 10.12.2001 IT PC20010038
(71) Applicant: POLIAUTO di P. Parietti & C. S.n.c., 29100 Piacenza PC (IT)
(72) Inventor: Parietti, Pietro, 29100 Piacenza (IT)
(74) Representative: La Ciura, Salvatore

(57) **Abstract**

A portable liquid gas cylinder is described, of the type comprising a float device (18, 19, 21) which, when a pre-set level of liquid gas is reached in the cylinder, activates means (7) designed to interrupt the gas supply, the said cylinder being characterised in that it includes means (7,12,15,16) designed to allow opening for the passage of gas only if the cylinder is in a position in which the said float device can operate correctly.

In particular valve means (7) are provided that close the gas inlet pipe, said valve means being movable between a first position in which they open the said gas inlet pipe (5) and a second position in which they close the said pipe, said valve means being subject to the pressure of the incoming gas that tends to move them to the closing position of the said pipe, gravity means (15,16,14) designed to cut off the said valve to prevent its movement to the opening position of the said pipe also being fitted, which said gravity means only cut off the said valve when the cylinder is in the correct position to allow correct operation of the said float device..

## Description

The present invention relates to a portable cylinder for liquid gas equipped with means designed to allow it to be filled in safe conditions and to limit the internal pressure to prevent the risk of explosion.

In particular the cylinder in accordance with the invention is equipped with means designed to prevent it from being filled beyond a given limit, namely means that prevent the input of gas if the cylinder is incorrectly positioned at the time of filling, with no need to use weight-based filling systems.

The aim is to obtain a portable cylinder which can be filled at any filling station under all the safety conditions laid down by law.

This is necessary if the cylinder is destined to fuel motor vehicles that cannot reach the filling station under their own power, such as boats, forklift trucks, lawnmowers, industrial sweepers, etc., which have either small or large engines, or for sundry other uses such as use in the home, on building sites, on campsites, etc.

Current safety legislation prohibits cylinders from being filled to more than 80% of their capacity in order to give the liquid phase in the cylinder an expansion margin in the event of exposure to heat.

Filling is only allowed if devices designed to control and limit the amount of gas introduced are present.

Normally, cylinders permanently fixed to motor vehicles have a float device which cuts off the input of gas when the level of the liquid in the cylinder reaches a pre-set value (80%), to give the liquid phase in the cylinder an expansion margin in the event of exposure to heat.

However, these float devices of known type operate incorrectly if the cylinder is not in a specific position at the time of filling, namely if the vehicle in which the cylinder is permanently installed is not on a substantially horizontal plane. These known devices therefore cannot be used for portable cylinders, as there is no certainty that they will be positioned correctly during the filling operation.

At present, the only system allowed by law for filling portable cylinders is one based on weight, performed in suitably equipped premises.

Cylinders permanently installed in motor vehicles are also fitted with a siphon that withdraws LPG in the liquid phase.

Known portable cylinders are not equipped with a siphon; they can consequently only be used to withdraw LPG in the gaseous phase, and are therefore only suitable for household use and the like, or to fuel small engines (up to approx. 15 CV).

The invention relates to a portable cylinder designed to contain LPG, in accordance with the characterising part of the claims.

In particular the cylinder in accordance with the invention:
- is equipped with a filling connector fitted with devices which limit filling to 80% of the inner volume so that the cylinder can technically only be filled at filling stations when it is in a specific position; filling takes place under maximum safety conditions in this position, but is technically impossible when the cylinder is in any other position
- is fitted with a sealed manual safety cap which closes the LPG inlet pipe
- is fitted internally with a siphon to allow fuel to be withdrawn in the liquid or gaseous phase, as required
- is fitted with a connector with a manual cut-off tap for withdrawing LPG
- can be positioned in three different ways to facilitate use in various situations and make it possible to withdraw LPG in the liquid or gaseous phase, as required
- can be fitted with an excess flow valve on the outlet connector
- can be fitted with an excess pressure valve which discharges excess pressure in the event of protracted exposure of the cylinder to heat
- can be fitted with a fusible plug which allows gas to be discharged into the external environment if the cylinder should catch fire
- can be fitted with an outer gauge showing the inner level of the liquid
- is fitted with a non-return valve on the withdrawal pipe.

All these aspects contribute to the safety of the cylinder assembly.

The invention will now be described by reference to the annexed figures, wherein:

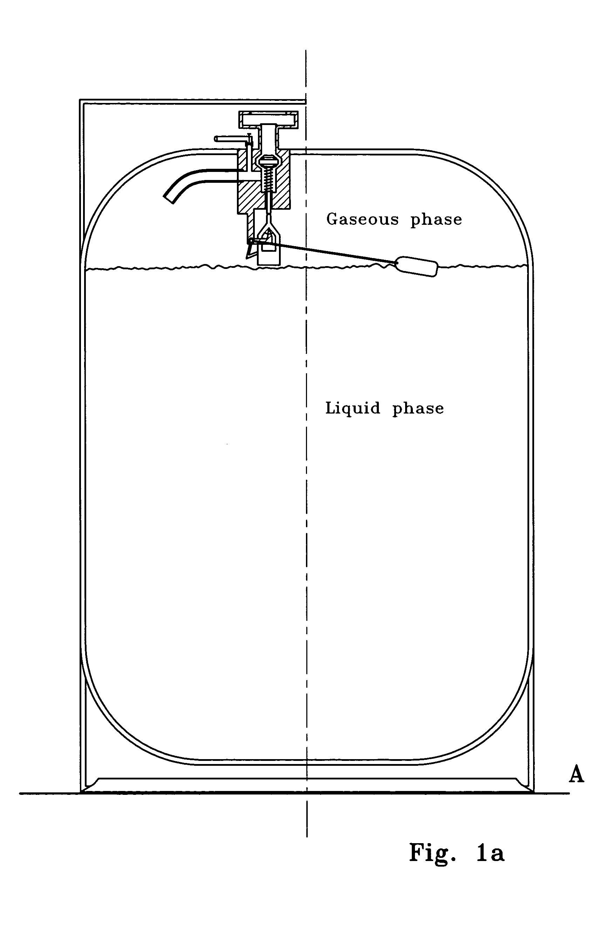

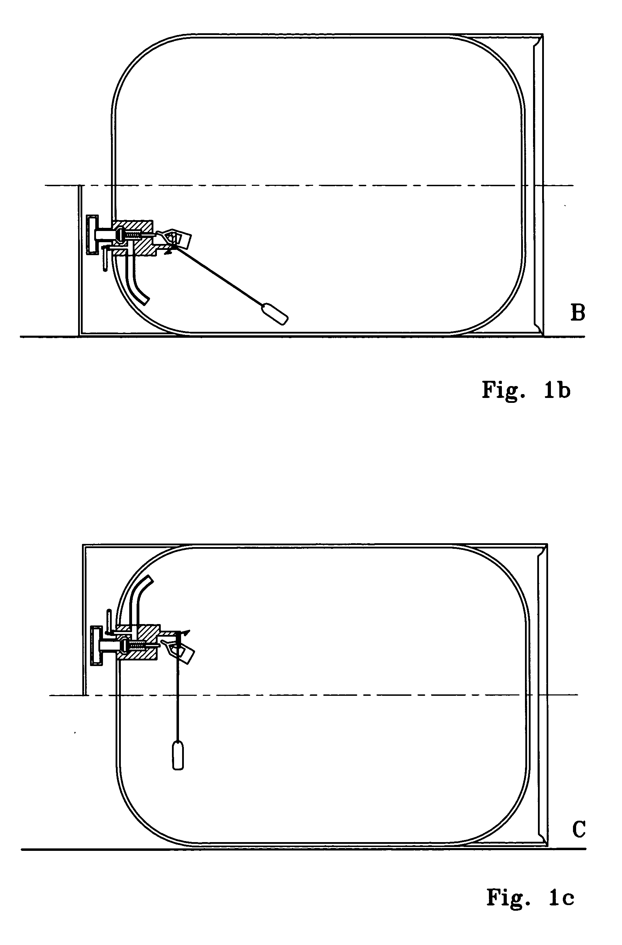

- figures 1a, 1b and 1c schematically illustrate a cylinder in accordance with the invention in the various support positions

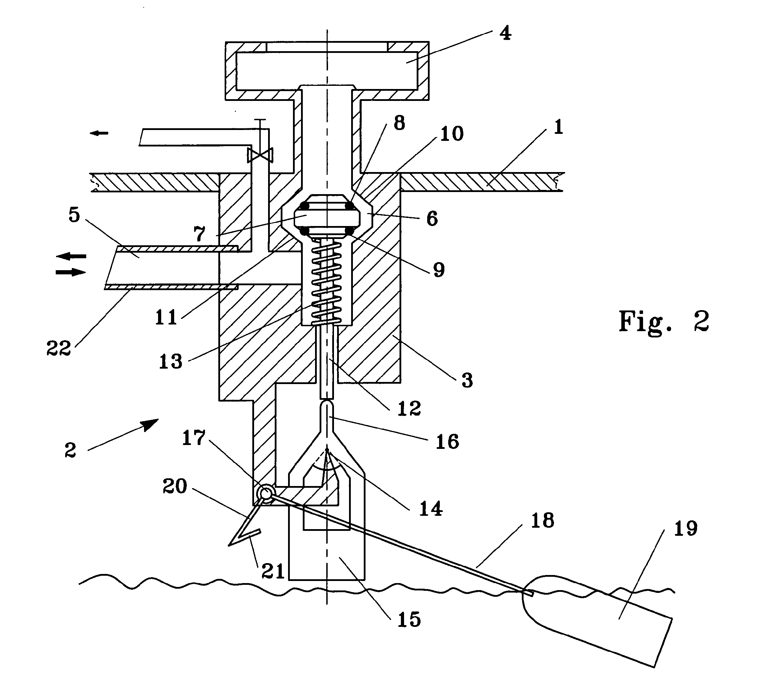

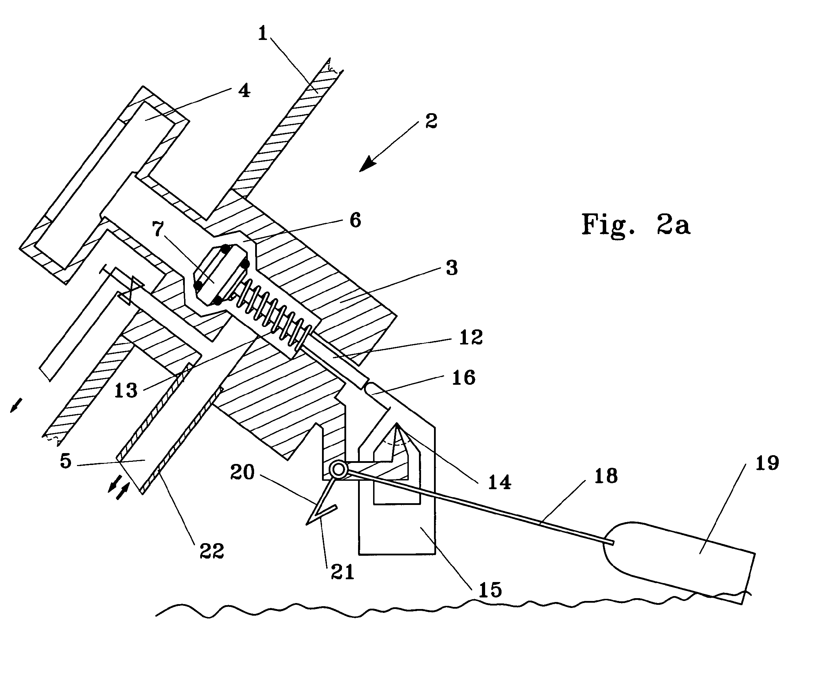

- figures 2 and 2a show the details of a cylinder in accordance with the invention, fitted with filling and withdrawal devices; figure 2 represents the simplest, coaxial embodiment, while figure 2a shows another embodiment in which the main axes of the filling device are inclined at any angle in relation to one another. This figure demonstrates that the filling device in question, if suitably constructed, can operate correctly even if fitted to the cylinder at a different angle.

In figure 2, number 1 indicates a cylinder wall fitted with a gas filling and withdrawal device shown as 2, substantially constituted by a body 3 which has a connector 4 on one side for connection to a nozzle of the type commonly used at filling stations which supply of liquid gas, and a pipe 22 with a gas inlet opening 5 that leads into the cylinder on the other side. Inlet opening 5 is connected to connector 4 via a pipe which contains a seating 6 for a valve 7.

Valve 7 is fitted at the top and bottom with ring-shaped gaskets 8 and 9 which, depending on the valve position, engage inclined walls 10 and 11 of seating 6 to prevent gas input and output as required.

When valve 7 is in an intermediate position between the two inclined walls 10 and 11, the communication between connector 4 and inlet opening 5 remains open, allowing the passage of gas.

Valve 7 is integral with a rod 12 which projects from body 3 and penetrates into the cylinder, while a helical spring 13 or the like tends to retain the valve against upper wall 10, preventing the outlet of gas.

Below body 3 there is a spherical joint 14 to which is fitted a block 15 that can freely oscillate in any position in relation to joint 14, thus constituting a kind of pendulum.

Block 15 is integral with stem 16 which is aligned with valve rod 12 when body 3 is in the correct filling position .

The length of rod 12 and stem 16 are such that when the said rod and the said stem are aligned, namely when the valve is in the intermediate position illustrated in figure 2, the rod comes into contact with and rests on the stem, thus allowing the passage of gas between connector 4 and inlet opening 5 of pipe 22.

A rod 18 which has a float 19 fitted to the end is hinged at 17 to body 3.

On the opposite side rod 18 extends beyond hinge 17 to form an arm 20 with end section 21 bent so as to engage with block 15 when the rod rotates as a result of an increase in the level of the gas in which float 19 is immersed.

Normally, spring 13 holds valve 7 in a raised position, with gasket 8 engaging with wall 10, closing the passage towards the connector and preventing the gas from exiting from the cylinder.

The pressure of the gas discharged onto the lower surface of valve 7 is added to the force exerted by the spring, blocking the passage with a force proportional to the pressure in the cylinder.

For the purpose of filling, the cylinder must be positioned so that block 15 moves to the position in which stem 16 is aligned with rod 12 of valve 7, as shown in figures 2 and 2a.

The nozzle is coupled to connector 4 and filling begins.

The pressure of the gas input which acts on the upper surface of piston 7 exceeds the force exerted by the spring and by the pressure in the tank, pushing valve 7 downwards.

If body 3 is in the correct position, stem 16 will be aligned with rod 12, preventing its descent when the piston is in the intermediate position in chamber 6, thus allowing the passage of gas from the connector to inlet opening 5 of the tank.

As filling continues and the level of the liquid in the cylinder rises, the float causes rod 18 and arm 20 to rotate until end 21 engages with block 15 at the moment when the level of the liquid reaches the maximum pre-set value.

If the cylinder is incorrectly positioned, the weight of block 15 will cause stem 16 to be positioned at a certain angle in relation to rod 12, which is no longer intercepted and can therefore descend freely.

The pressure of the gas introduced into the connector then pushes valve 7 downwards, causing gasket 9 to engage with the lower wall 11 of the chamber. In this position the valve forms a perfect seal with its seating, blocking the passage and preventing the gas from being conveyed towards inlet opening 5 of pipe 22.

In other words, valve 7 can only be locked in the passage opening position, thus allowing filling of the cylinder, if body 3 is placed in a particular correct position, namely the only position in which the bent end 21 of arm 20 engages with block 15 at exactly the same time as the pre-set level of the liquid is reached.

The result is a cylinder which, though portable, is fitted with all the safety devices required to allow it to be filled at a filling station with no risk of overfilling.

LPG is withdrawn through the same inner siphon pipe 22 as used for filling, via a gas outlet connector with a manual cut-off tap fitted to the cylinder.

During LPG withdrawal, as mentioned, the cylinder can be positioned in three different ways to facilitate its use in various situations and thus make it possible to withdraw LPG in the liquid or gaseous phase, as required:
- a first position with the cylinder vertical, resting on surface A as shown in figure 1a; this is the only position in which filling at a filling station is technically possible, and it also serves for withdrawal in the gaseous phase (for fuelling small domestic appliances or small engines)
- a second position with the cylinder horizontal, resting on surface B as shown in figure 1b, this position being suitable for withdrawal in the liquid phase (for fuelling powerful engines)
- a third position, again with the cylinder horizontal but resting on surface C shown in figure 1c, which is diametrically opposite to surface B, this position being suitable for withdrawal in the gaseous phase (fuelling of small engines).

During use, the cylinder can remain resting on the said surface A (withdrawal in the gaseous phase) or can be secured to horizontal support surfaces (B or C, for withdrawal in the liquid or gaseous phase respectively); a suitable indication on the outside of the cylinder gives information about the type of withdrawal.

One skilled in the art could devise various modifications and variations for all these devices, all of which should be deemed to fall within the ambit of this invention.

## Claims

1. Portable liquid gas cylinder of the type comprising a float device (18, 19, 21) which, when a pre-set level of liquid gas is reached in the cylinder, activates means (7) designed to interrupt the gas supply, the said cylinder being **characterised in that** it includes means (7,12,15,16) designed to allow opening for the passage of gas only if the cylinder is in a position in which the said float device can operate correctly.

2. Portable liquid gas cylinder as claimed in claim 1, **characterised in that** it includes valve means (7) that close the gas inlet pipe, which said valve means can move between a first position in which they open the said gas inlet pipe (5) and a second position in which they close the said pipe, which said valve means are subject to the pressure of the incoming gas that tends to move them to the closing position of the said pipe, gravity means (15,16,14) designed to cut off the said valve to prevent its movement to the opening position of the said pipe also being fitted, which said gravity means only cut off the said valve when the cylinder is in the correct position to allow correct operation of the said float device.

3. Portable liquid gas cylinder as claimed in claim 2, **characterised in that** the said gravity means are constituted by a pendulum device constituted by a block (15) fitted to a spherical joint (14) in such a way as to oscillate around it in any direction and always maintain it in a substantially vertical position, which said block (15) is equipped with a stem (16) designed to cut off the said valve means (7, 12) when the said stem and the said valve are aligned, and to release the said valve, allowing it to move to the closing position of pipe (5), when the said stem and the said valve are not aligned, while the said float device engages the said block causing it to tilt in relation to the said valve when the liquid gas level in the cylinder and therefore the height of the float reach a pre-set value corresponding to the maximum filling value allowed for the cylinder.

4. Portable liquid gas cylinder as claimed in each of the preceding claims, **characterised in that** the said valve means are constituted by a valve (7) that slides in a chamber which has two inclined opposite walls (10, 11), which said valve is fitted at the top and bottom with gaskets designed to engage with the said inclined walls to close the passage of gas, with a gas filling connector (4) leading to the said chamber on one side and a pipe (22, 5) which communicates with the interior of the cylinder leading to the said chamber on the other side, which said valve (7) is integral with a rod (12) that penetrates into the cylinder, while the said pendulum device (15, 16) moves in such a way that the said stem (16) is aligned with the said rod (12) when the cylinder is in the appropriate position to allow correct operation of the float device (19).

5. Portable liquid gas cylinder as claimed in each of the preceding claims, **characterised in that** it is fitted with a siphon (22) which, depending on the position of the cylinder, enables gas to be withdrawn in the liquid or gaseous phase.

6. Portable liquid gas cylinder as claimed in each of the preceding claims, **characterised in that** it has a single inner pipe (22) which can be used alternatively for filling the cylinder or for withdrawing the gas required by the user.
